# EUROPÄISCHE PATENTSCHRIFT

(11) **EP 1 165 678 B1**
(45) Veröffentlichungstag und Bekanntmachung des Hinweises auf die Patenterteilung: **03.05.2006**
(21) Anmeldenummer: 00904944.6
(22) Anmeldetag: 22.01.2000
(51) Int. Cl.: C08K 5/17, C08K 5/103, C08K 5/15

(54) **VERWENDUNG VON FETTSÄUREALKANOLAMINESTERN**
USE OF FATTY ACID ALKANOLAMINE ESTERS AS ANTISTATICS
UTILISATION D'ESTERS D'ALCANOLAMINE D'ACIDE GRAS

(30) Priorität: 30.01.1999 DE 19903715
(43) Veröffentlichungstag der Anmeldung: 02.01.2002
(73) Patentinhaber: Cognis Deutschland GmbH & Co. KG, 40789 Monheim (DE)
(72) Erfinder: MILAN, Sergio, E-08018 Barcelona (ES)
(86) Internationale Anmeldenummer: PCT/EP2000/000467
(87) Internationale Veröffentlichungsnummer: WO 2000/044824

(56) Entgegenhaltungen:
- WO-A-94/15011
- FR-A- 2 078 048
- US-A- 2 678 285

## Beschreibung

### Gebiet der Erfindung

Die Erfindung befindet sich auf dem Gebiet der thermoplastischen Kunststoffe und betrifft die Verwen-dung von ausgewählten stickstoffhaltigen Tensiden als antistatische Zusatzstoffe.

### Stand der Technik

Thermoplastische Kunststoffe, vorzugsweise PVC, dienen zur Herstellung einer Vielzahl von Gegenständen des täglichen Lebens, von denen Folien zu den bekanntesten zählen. Thermoplasten stellen wie die meisten Kunststoffe aufgrund ihrer chemischen Konstitution ausgesprochene Isolatoren dar. Ein Nachteil besteht jedoch darin, daß sich die Stoffe sehr leicht elektrostatisch aufladen und einmal aufgebrachte Ladungen wegen der geringen Oberflächenleitfähigkeit nicht rasch genug abgeführt werden können. Die elektrostatische Aufladung von Kunststoffen kann in der Praxis sowohl Belästigungen verursachen als auch emste Gefahrensituationen heraufbeschwören. Zu nennen sind hier vor allem:
- Starke Verschmutzung von Kunststoffoberflächen,
- Produktionsstörungen durch Verkleben von Folienbahnen sowie
- Funkenbildung durch starke Aufladung mit nachfolgender Zündung von Staub/Luft-Gemischen.

Um das Problem der statischen Aufladung zu lösen, werden den Thermoplasten in der Regel Antistatika zugesetzt, die die Ableitung der Ladungen von der Oberfläche erleichtern. Beispiele für interne Antistatika, also Stoffe, die der Polymermasse vor oder während der Verarbeitung zugefügt werden, stellen anionische, nichtionische oder kationische Tenside dar. Eine Übersicht hierzu bietet S.Riethmayer in **Gummi, Asbest, Kunstst., 26, S.76-88, 182-184, 298-308, 419-429, 507-512 (1973).**

Aus der Japanischen Patentanmeldung mit dem Anmeldeaktenzeichen **JP- 94/226266** (Henkel) sind Antistatika für PVC bekannt, die Mischungen von Komplexestem, Alkylbenzolsulfonaten und Alkylsulfaten darstellen. Aus der Deutschen Patentanmeldung (Henkel) **DE-A1 4304468** sind für den gleichen Anwendungszweck Polyolkomplexester bekannt. Als Handelsprodukt mit der Bezeichnung "Dehydat 80-X" sind schließlich Antistatika für die Ausrüstung von PVC der Firma Henkel bekannt, die Gemische von anionischen Tensiden (sekundäre Alkansulfonate) und nichtionischen Tensiden (Aminpolyglycolether) darstellen.

Die Antistatika des Stands der Technik sind in ihren Eigenschaften jedoch weiterhin verbesserungswürdig: Entweder reduzieren sie die Oberflächenladung der Thermoplasten nicht rasch genug auf einen gewünschten Wert oder aber sie sind in ihren antistatischen Eigenschaften zwar zufriedenstellend, führen jedoch zu unerwünschten Trübungen in den Folien.

Demzufolge hat die Aufgabe der vorliegenden Erfindung darin bestanden, thermoplastische Kunststoffe im allgemeinen und Polyvinylchlorid sowie Polyolefinen im besonderen dergestalt auszurüsten, daß einerseits die elektrostatische Aufladung signifikant reduziert wird und andererseits transparente und gegen Eintrübung dauerhaft geschützte Folien erhalten werden.

### Beschreibung der Erfindung

Gegenstand der Erfindung ist die Verwendung von Fettsäurealkanolaminestern als Antistatika für thermoplastische Kunststoffe, speziell für Polyvinylchlorid und Polyolefine.

Überraschenderweise wurde gefunden, daß Fettsäurealkanolaminester thermoplastischen Kunststoffen nicht nur ausgezeichnete antistatische Eigenschaften verleihen, sondern auch zu transparenten Folien führen, die selbst bei längerer Lagerung kaum Tendenz zu Eintrübungen zeigen.

### Thermoplastische Kunststoffe

Im Sinne der Erfindung kann sich die antistatische Aufrüstung auf thermoplastische Kunststoffe im allgemeinen beziehen. Typische Beispiele hierfür sind Polyolefine, wie etwa Low Density und High Density Polyethylen, Polypropylen, Polystyrol, Vinylpolymere, Polyamide, Polyester, Polyacetale, Polycarbonate und Polyurethane. Vorzugsweise werden jedoch Polyvinylchloride additiviert, welche insbesondere K-Werte im Bereich von 30 bis 80 aufweisen.

### Fettsäurealkanolaminester

Als Fettsäurealkanolaminestern kommen Ester von Fettsäuren mit Diethanolalkylaminen der Formel (**II**) in Betracht, 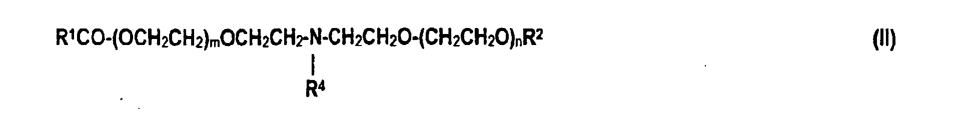 in der R¹CO für einen Acylrest mit 6 bis 22 Kohlenstoffatomen, R² für Wasserstoff oder R¹CO, R⁴ für einen Alkylrest mit 1 bis 4 Kohlenstoffatomen und m und n in Summe für 0 oder Zahlen von 1 bis 12 steht. Als zweite Gruppe geeigneter Fettsäureolkanolamin ester sind schließlich die Ester von Fettsäuren mit 1,2-Dihydroxypropyldialkylaminen der Formel (**III**) zu nennen, 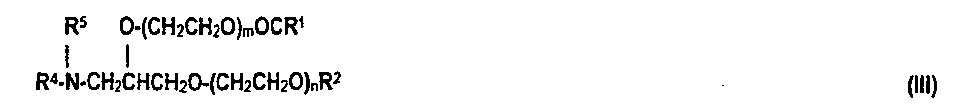 in der R¹CO für einen Acylrest mit 6 bis 22 Kohlenstoffatomen, R² für Wasserstoff oder R¹CO, R⁴ und R⁵ unabhängig voneinander für Alkylreste mit 1 bis 4 Kohlenstoffatomen und m und n in Summe für 0 oder Zahlen von 1 bis 12 steht. Hinsichtlich der Auswahl der bevorzugten Fettsäuren und des optimalen Veresterungsgrades für die Alkanolaminester der Formeln (II) und (III),gelten das typische Beispiele für Fettsäuretriethanolaminester, die im Sinne der Erfindung Verwendung finden können, Produkte auf Basis von Capronsäure, Caprylsäure, Caprinsäure, Laurinsäure, Myristinsäure, Palmitinsäure, Isostearinsäure, Stearinsäure, Ölsäure, Elaidinsäure, Arachinsäure, Behensäure und Erucasäure sowie deren technische Mischungen, wie sie beispielsweise bei der Druckspaltung natürlicher Fette und Öle anfallen sind. Vorzugsweise werden technische C1_{2/18-}Kokosfettsäuren und insbesondere teilgehärtete C_{16/18}-Talg- bzw. Palmfettsäuren sowie elaidinsäurereiche C_{16/18}-Fettsäureschnitte eingesetzt. Zur Herstellung der Ester können die Fettsäuren und das Triethanolamin im molaren Verhältnis von 1,1: 1 bis 3 : 1 eingesetzt werden. Im Hinblick auf die anwendungstechnischen Eigenschaften der Ester hat sich ein Einsatzverhältnis von 1,2: 1 bis 2,2 : 1, vorzugsweise 1,5 : 1 bis 1,9 : 1 als besonders vorteilhaft erwiesen. Die bevorzugten Fettsäuretriethanolaminester stellen technische Mischungen von Mono-, Di- und Triestern mit einem durchschnittlichen Veresterungsgrad von 1,5 bis 1,9 dar und leiten sich von technischer C_{16/18}-Talg- bzw. Palmfettsäure (lodzahl 0 bis 40) ab.

### Partialglyceride

In einer weiteren bevorzugten Ausführungsform der Erfindung werden die Fettsäurealkanolaminester zusammen mit Gleitmitteln vom Typ der Partialglyceride eingesetzt, die eine synergistische Verbesserung der Farbstabilität hervorrufen. Partialglyceride, also Monoglyceride, Diglyceride und deren technische Gemische können herstellungsbedingt noch geringe Mengen Triglyceride enthalten. Die Partialglyceride folgen vorzugsweise der Formel (**IV**), 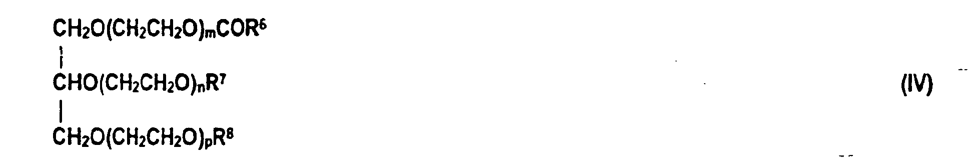 in der R⁶CO für einen linearen oder verzweigten, gesättigten und/oder ungesättigten Acylrest mit 6 bis 22, vorzugsweise 12 bis 18 Kohlenstoffatomen, R⁷ und R⁸ unabhängig voneinander für R⁶CO oder H und die Summe (m+n+p) für 0 oder Zahlen von 1 bis 100, vorzugsweise 5 bis 25 steht, mit der Maßgabe, daß mindestens einer der beiden Reste R⁷ und R⁸ H bedeutet. Typische Beispiele sind Mono- und/oder Diglyceride auf Basis von Capronsäure, Caprylsäure, 2-Ethylhexansäure, Caprinsäure, Lau-rinsäure, Isotridecansäure, Myristinsäure, Palmitinsäure, Palmoleinsäure, Stearinsäure, lsostearinsäu-re, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Vorzugsweise werden technische Laurinsäureglyceride, Palmitinsäureglyceride, Stearinsäureglyceride, Isostearinsäureglyceride, Ölsäureglyceride, Behensäureglyceride und/oder Erucasäureglyceride eingesetzt, welche ei-nen Monoglyceridanteil im Bereich von 50 bis 95, vorzugsweise 60 bis 90 Gew.-% aufweisen. Das Gewichtsverhältnis zwischen den Trialkanolaminestem und den Partialglyceriden kann dabei im Bereich von 90 : 10 bis 10 : 90, vorzugsweise 75 : 25 bis 25 : 75 und insbesondere 60 : 40 bis 40 : 60 variieren.

### Sorbitanester

In einer weiteren bevorzugten Ausführungsform der Erfindung werden die Fettsäurealkanolaminester zusammen mit Gleitmitteln vom Typ der Sorbitanester eingesetzt, die ebenfalls eine synergistische Verbesserung der Farbstabilität bewirken. Sorbitanester folgen vorzugsweise der Formel (**V**), 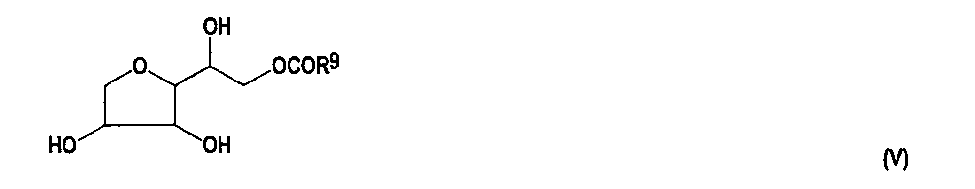 in der R⁹CO für lineare oder verzweigte, gesättigte oder ungesättigte Acylreste mit 6 bis 22 und vorzugsweise 12 bis 18 Kohlenstoffatomen steht. Formel (**I**) gibt zwar nur Sorbitanmonoester wieder, in Betracht gezogen werden jedoch auch Sorbitandi-, -sesqui- und -triester sowie deren Gemische. Typische Beispiele sind Mono-, Sesqui-, Di- und/oder Triester des Sorbitans mit Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Besonders bevorzugt sind Sorbitanmonopalmitat und Sorbitanmonostearat. Das Gewichtsverhältnis zwischen den Trialkanolaminestem und den Sorbitanestern kann dabei im Bereich von 90 : 10 bis 10 : 90, vorzugsweise 75 : 25 bis 25 : 75 und insbesondere 60 : 40 bis 40 : 60 variieren.

### Interne und Externe Anwendung

Zur antistatischen Ausrüstung der thermoplastischen Kunststoffe werden beispielsweise die pulverisierten bzw. granulierten Polymere mit den Additiven vermischt und intensiv homogenisiert. Dies kann dergestalt erfolgen, daß die Zusatzstoffe, also beispielsweise Fließverbesserer, Stabilisatoren, Gleitmittel, Antistatika, und Weichmacher einzeln zugegeben werden. Es ist jedoch ebenso möglich, ein sogenanntes Masterbatch, d.h. eine homogene Mischung aller Additive herzustellen und diese dann mit dem Kunststoff zu vermischen. Es empfiehlt sich das Vermischen in der Wärme, vorzugsweise oberhalb des Erweichungspunktes des Thermoplasten durchzuführen und die additivierte Mischung dann unmittelbar weiterzuverarbeiten, d.h. beispielsweise durch Extrusion, Spritzgießen, Kalandrieren, Walzen, Blasformen, Streckziehen und dergleichen. Neben der Verwendung als interne Antistatika können die Fettsäurealkanolaminester auch als externe Antistatika eingesetzt werden, d.h. die Ester werden aus wäßriger oder alkoholischer Lösung auf die Oberfläche aufgebracht.

### Hilfs- und Zusatzstoffe

Die Fettsäurealkanolaminester können gemeinsam mit weiteren Hilfs- und Zusatzstoffen für die Herstellung und Verarbeitung von Thermoplasten, wie beispielsweise Fließ- und Schlagzähigkeitsverbesserem, Gleitmitteln, Stabilisatoren, Weichmachern, Co-Antistatika, Füllstoffen, Farbpigmenten und dergleichen eingesetzt werden.

Beispiele für geeignete Schlagzähigkeitsverbesserer sind Ethylen-Vinylacetat-Copolymere als Propfgrundlage, Ethylen-Vinylacetat/Vinylchlorid-Propfpolymerisate, Polyacrylsäureester/Vinylchlorid-Propf-polymerisate, Acrylsäureester/Methylmethacrylat-Propfpolymerisate, chloriertes Polyethylen, Methyl-methacrylat-Butadien-Styrol-Propfpolymerisat und Acrylnitril-Butadien-Styrol-Terpolymerisat (letztere beiden für die Innenanwendung).

Zu den typischen Gleitmittel zählen beispielsweise Kohlenwasserstoffe (Paraffinöle, natürliche Paraffine, Syntheseparaffine, Polyethylenwachse niedriger und hoher Dichte), Polypropylenwachse), Alkohole (Cetylalkohol, Stearylalkohol, Talgfettalkohol), Ketone (Stearon), Carbonsäuren (Laurinsäure, Myristinsäure, Palmitinsäure, Stearinsäure, Hydroxystearinsäure, Talgfettsäure, Arachinsäure, Behensäure, Montansäure, oxidierte Polyethylenwachse), Metallsalze von Carbonsäuren (Calciumstearat, Zink-stearat, Bleistearat, Calciummontanat, Calciumsalze oxidierter Polyethylenwachse bzw. synthetischer Wachssäuren), Carbonsäureamide (Ölsäureamid, Erucasäureamid, Stearinsäureamid, Ethylendi-stearoyldiamid), Carbonsäureester (Ethylstearat, n-Butylstearat, Isobutylstearat, Isooctylstearat, Isotridecylstearat, Cetylpalmitat, Cetylstearat, Ethylenglycolmonostearat, Glycerinmonooleat, Glycerinmono-ricinoleat, Glycerinmonostearat, Glycerinmono-12-hydroxystearat, Glycerintristearat, Glycerintri-12-hy-droxystearat, Glycerintribehenat, Glycerintrimontanat, Pentaerythrittetrastearat, Pentaerythrittetra-behenat, Mischester aus Adipinsäure, Pentaerythrit und Stearinsäure, Montansäureester, teilverseifte Montansäureester). In einer bevorzugten Ausführungsform der Erfindung werden die Esterquats zusammen mit Gleitmitteln vom Typ der Fettsäuren, Fettalkohole und/oder Partialglyceride eingesetzt, wobei das Gewichtsverhältnis der Komponenten im Bereich von 90 : 10 bis 60 : 40 liegen kann. Die Mischungen haben den Vorteil, daß sie die Farbstabilität der Kunststoffe sehr positiv beeinflussen.

Die Stabilisatoren werden in UV-Adsorber (Hydroxybenzophenone, Hydroxyphenylbenzotriazole, Zimt-säureester, Oxalanilide), Quencher (im wesentlichen Nickel-Komplexe), Hydroperoxidzersetzer (Thiocarbamate, Thiophosphate, Thiobisphenolate) und Radikalfänger (sterisch gehinderte Amine) unterteilt. Aus der Vielzahl von Stabilisatoren sollen stellvertretend die folgende Stoffe genannt werden, die insbesondere für die Stabilisierung von Polyvinylchlorid eingesetzt werden: 2-Hydroxy-4-n-octoxy-benzo-phenon, 2-(2'-Hydroxy-5'-methylphenyl)-benzotriazol, 2-(2'-Hydroxy-3',5'-di-tert.butylphenyl)-benzotriazol, 2,2'-Dihydroxybenzophenon, 2-Hydroxy-4-methoxybenzophenon, N,N'-(2-ethyl-2'-ethoxyphe-nyl)-oxalsäureamid, 2-Carbmethoxy-4'-methoxyzimtsäuremethylester, 2-Cyano-3-methyl-4'-methoxy-zimtsäuremethylester, Sebacinsäure-bis-2,2,6,6-tetramethyl-4-piperidylester, Organozinncarboxylate. Weiterhin geeignet sind β-Ketoverbindungen, wie beispielsweise β-Diketone oder β-Ketocarbonsäuren.

Beispiele für geeignete **Weichmacher** sind Phthalsäureester (Dimethylphthalat, Diethylphthalat, Dibutylphthalat, Dihexylphthalat, Di-2-ethylhexylphthalat, Di-n-octylphthalat, Di-i-octylphthalat, Di-i-nonyl-phthalat, Di-i-decylphthalat, Di-i-tridecylphthalat, Dicyclohexatphthalat, Dimethylcyclohexylphthalat, Di-methylglycolphthalat, Dibutylglycolphthalat, Benzylbutylphthalat, Diphenylphthalat), Phosphorsäureester (Tributylphosphat, Tri-2-ethylbutylphosphat, Tri-2-ethylhexylphosphat, Trichlorethylphosphat, 2-ethylhexyldiphenylphosphat, Kresyldiphenylphosphat, Triphenylphosphat, Trikresylphosphat, Trixylenylphosphat), Ester der Adipin-, Azelain- und Sebacinsäure (Di-2-ethylhexyladipat, Di-i-octyladipat, Di-i-nonyladipat, Di-i-decyladipat, Benzylbutyladipat, Benzyloctyladipat, Di-2-ethylhexylazelat, Di-2-ethyl-hexylsebacat, Di-i-decylsebacat), Fettsäureesterm epoxidierte Fettsäureester, Citronensäureester, Ester der Essig-, Propion- und Buttersäure, Ester der Ethylbutter- und Ethylhexansäure, Glycolsäureester, Polyester, Chlorparaffine, Kohlenwasserstoffe, Benzoesäureester, Trimellithsäureester, Sulfonsäureester und Sulfamide, Alkohole, Ether und Ketone sowie Abietinsäureester.

Als **Füllstoffe** kommen Carbonate (Calciumcarbonat, Dolomit), Silicate (Talkum, Asbest, Kaolin, Glimmer), Siliciumdioxid, Aluminiumhydroxid, Ruß, organische Stoffe (Nußschalen, Holzmehl, Maiskolben), Glasfasern, Glaskugeln, Hohlglaskugeln, Kohlenstofffasern, Aramidfasern, Whiskers und dergleichen in Frage. Beispiele für geeignete Farbpigmente sind Titandioxid, Eisenoxide, Farbruße, Chromgelb-Pigmente, Molybdatrot-Pigmente, Chromoxidgrün-Pigmente, Mischphasenpigmente und Cadmium-Pigmente.

Die Zusatzmenge der Hilfsstoffe kann - bezogen auf 100 Gewichtsteile Thermoplast - in Summe 1 bis 10 und vorzugsweise 4 bis 8 Gewichtsteile betragen.

### Beispiele

**Beispiele 1 bis 14, nicht erfindungsgemäß Vergleichsbeispiele V1 bis V10.** Polyvinylchloride bzw. Polyolefine wurden unter Zusatz verschiedener Antistatika und Hilfsstoffe zu Folien verarbeitet; dabei bedeutet (tr) = transparent und (op) = opak. Anschließend wurde die Oberfläche der Folien definiert aufgeladen und die Entladungszeit gemessen. Die antistatische Wirksamkeit ermittelt sich durch Multiplikation der Entladungszeit von 100 bzw. 500 auf 0 Volt in h mit Ohm. Dabei gilt: je kleiner der Wert, desto besser die antistatische Wirkung. Die Thermostabilität der Polymere wurde durch zwei Parameter erfaßt, nämlich die Zeitspanne (a) bis zum ersten Auftreten einer Verfärbung bei Temperaturbelastung und (b) bis zum Schmelzen der Folie. Die Ergebnisse sind in den Tabellen 1 und 2 zusammengefaßt. Die Beispiele 1 bis 14 sind erfindungsgemäß, die Beispiele V1 bis V10 dienen zum Vergleich. Bei erfindungsgemäßer Verwendung von Fettsäurealkanolaminestern, gegebenenfalls in Abmischung weiteren Zusatzstoffen, wurden transparente Folien mit guter antistatischer Ausrüstung erhalten.

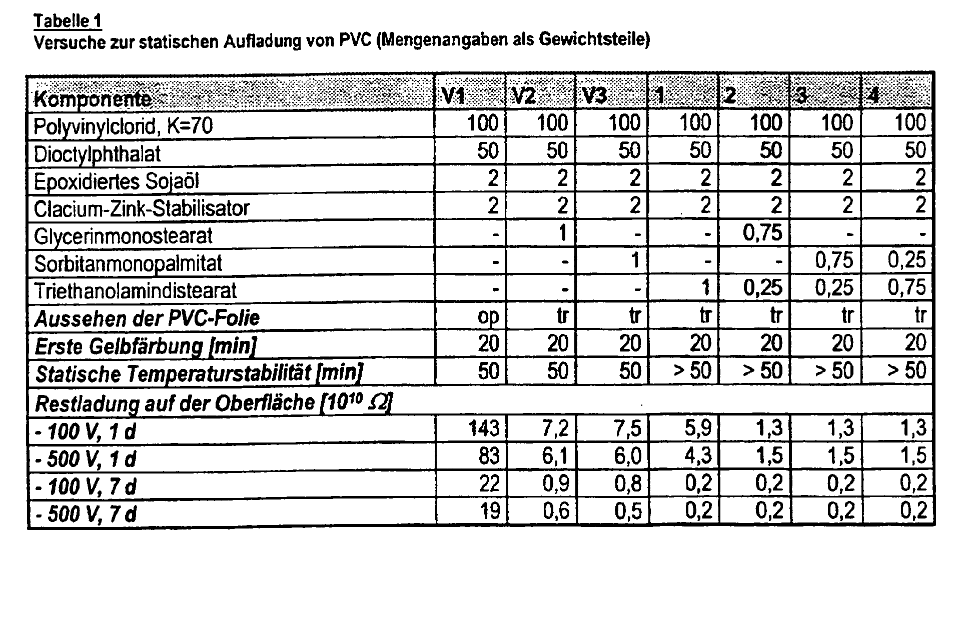

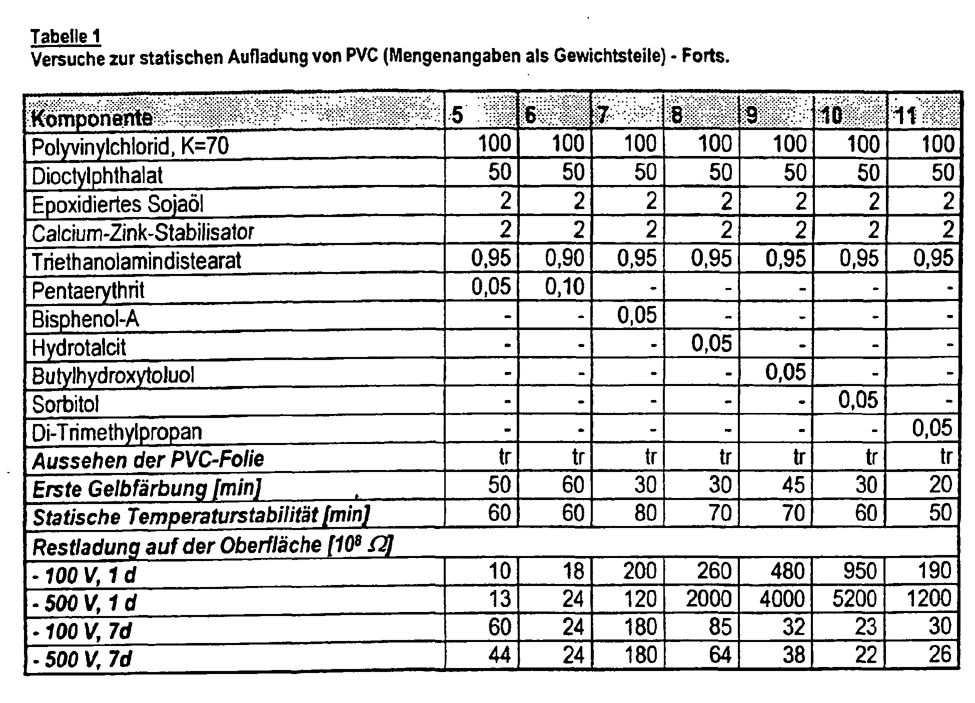

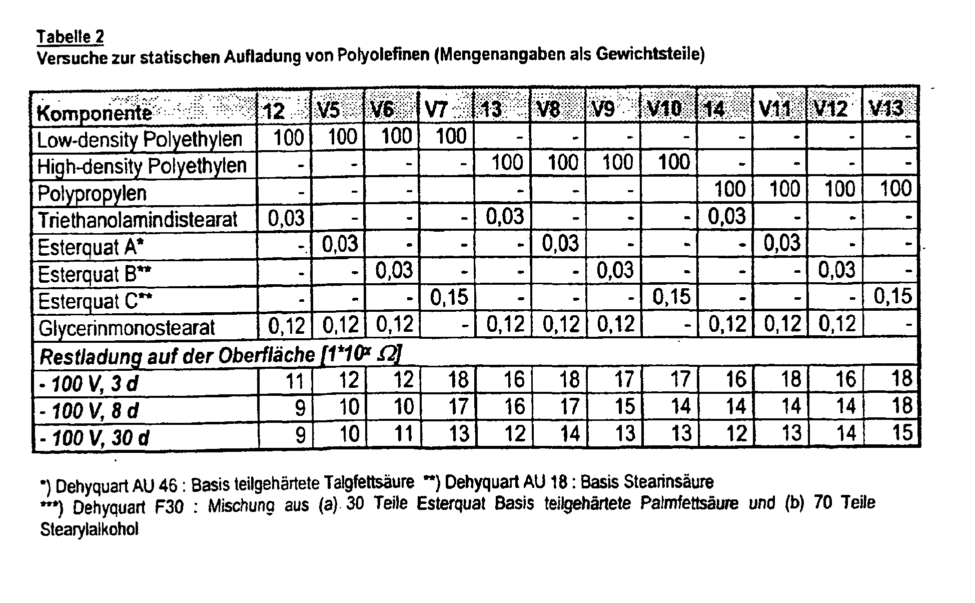

## Patentansprüche

1. Verwendung von Zusammensetzungen enthaltend mindestens einen Fettsäurealkanolaminester ausgewählt aus der Gruppe der Fettsäurealkanolaminester der Formel (**II**), 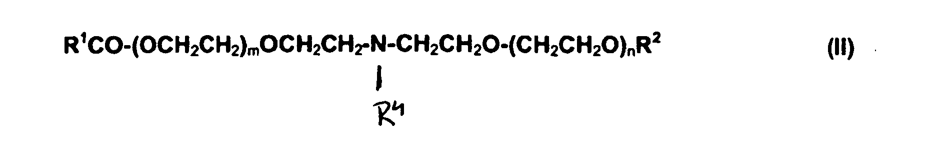 in der R¹CO für einen Acylrest mit 6 bis 22 Kohlenstoffatomen, R² für Wasserstoff oder R¹CO, R⁴ für einen Alkylrest mit 1 bis 4 Kohlenstoffatomen und m und n in Summe für 0 oder Zahlen von 1 bis 12 steht und der Fettsäurealkanolaminester der Formel **(III)**, 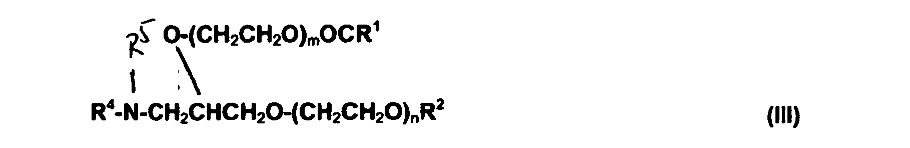 in der R¹CO für einen Acylrest mit 6 bis 22 Kohlenstoffatomen, R² für Wasserstoff oder R¹CO, R⁴ und R⁵ unabhängig voneinander für Alkylreste mit 1 bis 4 Kohlenstoffatomen und m und n in Summe für 0 oder Zahlen von 1 bis 12 steht und mindestens eine Verbindung ausgewählt aus der Gruppe der Fettsäurepartialglyceride der Formel (**IV**), 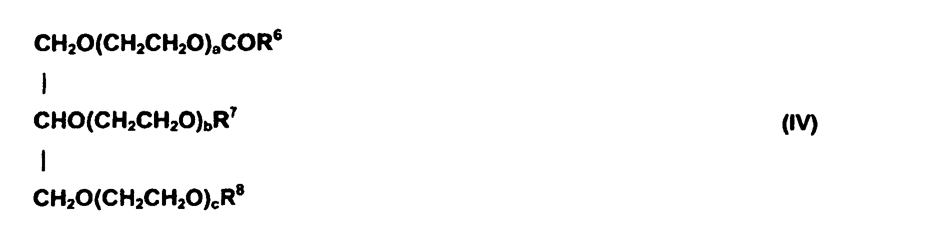 in der R⁶CO für einen linearen oder verzweigten, gesättigten und/oder ungesättigten Acylrest mit 6 bis 22 Kohlenstoffatomen, R⁷ und R⁸ unabhängig voneinander für R⁶CO oder H und die Summe (a+b+c) für 0 oder Zahlen von 1 bis 100 steht, mit der Maßgabe, dass mindestens einer der beiden Reste R⁷ und R⁸ H bedeutet und der Sorbitanester der Formel (V), 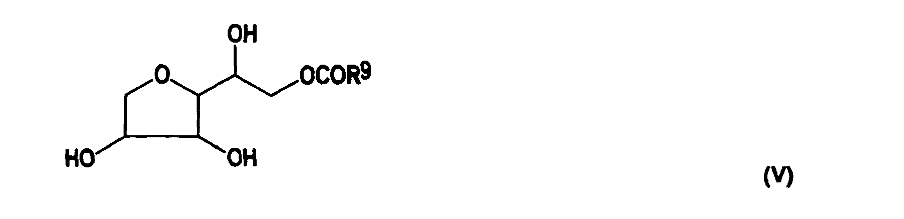 in der R⁹CO für lineare oder verzweigte, gesättigte oder ungesättigte Acylreste mit 6 bis 22 und vorzugsweise 12 bis 18 Kohlenstoffatomen steht,
als interne Antistatika für thermoplastische Kunststoffe.

2. Verwendung nach Anspruch 1, wobei es sich bei den Kunststoffen um Polyvinylchloride und Polyolefine handelt.

3. Verwendung nach Anspruch 1 oder 2, wobei man die Fettsäurealkanolaminester und die Partialglyceride bzw. Sorbitanester im Gewichtsverhältnis 90 : 10 bis 10 : 90 einsetzt.

4. Verwendung nach einem der Ansprüche 1 bis 3, wobei man die Fettsäurealkanolaminester bezogen auf 100 Gewichtsteile Thermoplast - in Mengen von 0,5 bis 5 Gewichtsteilen einsetzt.

## Claims

1. The use of compositions containing at least one fatty acid alkanolamine ester selected from the group of fatty acid alkanolamine esters corresponding to formula (**II**): 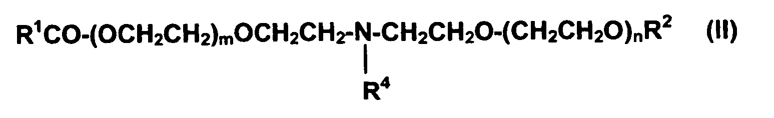 in which R¹CO is an acyl group containing 6 to 22 carbon atoms, R² is hydrogen or has the same meaning as R¹CO, R⁴ is an alkyl group containing 1 to 4 carbon atoms and m and n together stand for 0 or numbers of 1 to 12,
and fatty acid alkanolamine esters corresponding to formula (**III**): 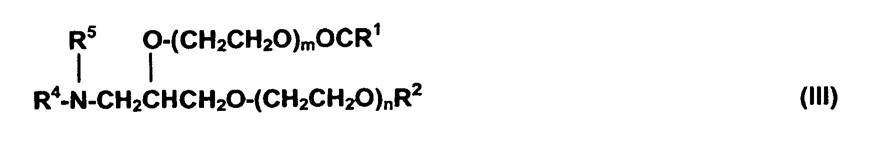 in which R¹CO is an acyl group containing 6 to 22 carbon atoms, R² is hydrogen or has the same meaning as R¹CO, R⁴ and R⁵ independently of one another are alkyl groups containing 1 to 4 carbon atoms and m and n together stand for 0 or numbers of 1 to 12,
and at least one compound selected from the group of fatty acid partial glycerides corresponding to formula **(IV):** 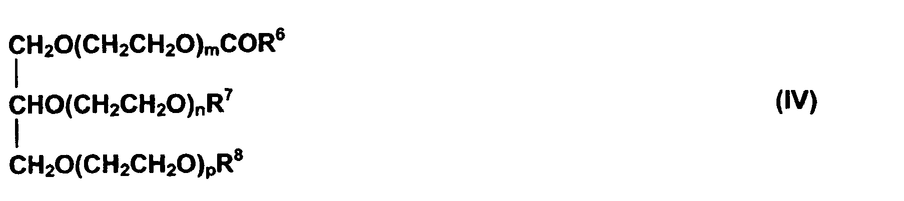 in which R⁶CO is a linear or branched, saturated and/or unsaturated acyl group containing 6 to 22 carbon atoms, R⁷ and R⁸ independently of one another have the same meaning as R⁶CO or represent H and the sum (m+n+p) is 0 or a number of 1 to 100, with the proviso that at least one of the two substituents R⁶ and R⁷ represents H,
and sorbitan esters corresponding to formula (**V**): 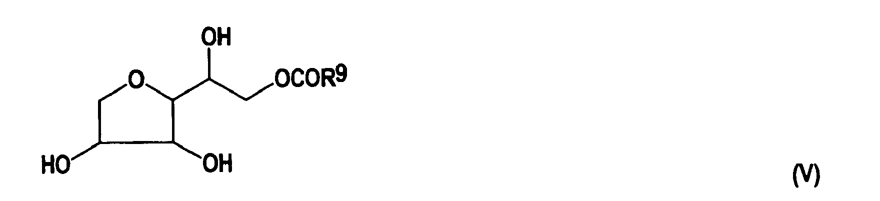 in which R⁹CO represents linear or branched, saturated or unsaturated acyl groups containing 6 to 22 and preferably 12 to 18 carbon atoms,
as internal antistatic agents for thermoplastics.

2. The use claimed in claim 1, **characterized in that** the plastics are polyvinyl chlorides and polyolefins.

3. The use claimed in claim 1 or 2, **characterized in that** the fatty acid alkanolamine esters and the partial glycerides or sorbitan esters are used in a ratio by weight of 90:10 to 10:90.

4. The use claimed in at least one of claims 1 to 3, **characterized in that** the fatty acid alkanolamine esters are used in quantities - based on 100 parts by weight of thermoplastic - of 0.5 to 5 parts by weight.

## Revendications

1. Utilisation de compositions contenant au moins un ester d'alcanolamine d'acide gras choisi dans le groupe des esters d'alcanolamine d'acide gras de formule (II) 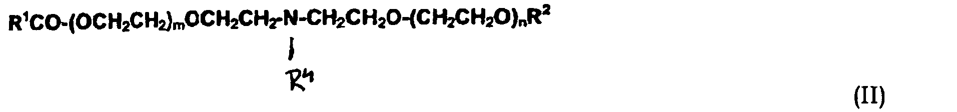 dans laquelle R¹CO représente un radical acyle comportant 6 à 22 atomes de carbone, R² représente un atome d'hydrogène ou R¹CO, R⁴ représente un radical alkyle comportant 1 à 4 atomes de carbone, et m et n ont pour somme 0 ou des nombres de 1 à 12, et des esters d'alcanolamine d'acide gras de formule (III) 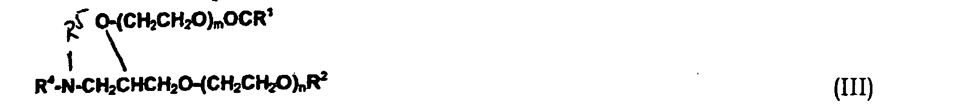 dans laquelle R¹CO représente un radical acyle comportant 6 à 22 atomes de carbone, R² représente un atome d'hydrogène ou R¹CO, R⁴ et R⁵ représentent indépendamment l'un de l'autre des radicaux alkyle comportant 1 à 4 atomes de carbone, et m et n ont pour somme 0 ou des nombres de 1 à 12, ainsi qu'au moins un composé choisi dans le groupe des glycérides partiels d'acide gras de formule (IV) 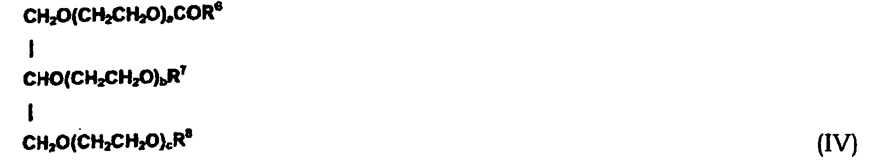 dans laquelle R⁶CO représente un radical acyle linéaire ou ramifié, saturé et/ou insaturé comportant 6 à 22 atomes de carbone, R⁷ et R⁸ représentent indépendamment l'un de l'autre R⁶CO ou H, et la somme (a+b+c) représente 0 ou des nombres de 1 à 100, étant précisé qu'au moins l'un des deux radicaux R⁷ et R⁸ représente H et des esters de sorbitane de formule (V) 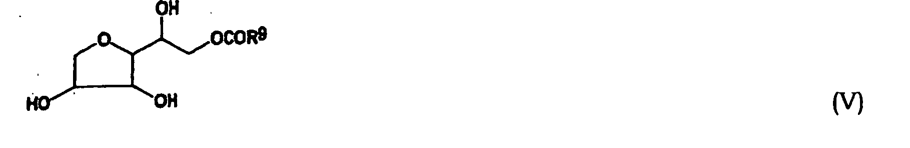 dans laquelle R⁹CO représente des radicaux acyle linéaires ou ramifiés, saturés ou insaturés comportant 6 à 22 et de préférence 12 à 18 atomes de carbone,
comme antistatiques internes pour des matières plastiques thermoplastiques.

2. Utilisation selon la revendication 1, les matières plastiques étant des chlorures de polyvinyle et des polyoléfines.

3. Utilisation selon la revendication 1 ou 2,
selon laquelle
on utilise les esters d'alcanolamine d'acides gras et les glycérides partiels ou les esters de sorbitane dans un rapport pondéral de 90:10 à 10:90.

4. Utilisation selon l'une quelconque des revendications 1 à 3,
selon laquelle
on utilise les esters d'alcanolamine d'acides gras - par rapport à 100 parties en poids de thermoplaste - dans des quantités de 0,5 à 5 parties en poids.
